# FASCICULE DE BREVET EUROPEEN

(11) **EP 2 589 051 B1**
(45) Date de publication et mention de la délivrance du brevet: **16.05.2018**
(21) Numéro de dépôt: 11741614.9
(22) Date de dépôt: 28.06.2011
(51) Int. Cl.: H04M 11/06, H04L 12/28, H01B 11/04

(54) **PRISE TÉLÉPHONIQUE ET ADAPTATEUR POUR UN RÉSEAU LOCAL HAUT DÉBIT**
TELEFONBUCHSE UND ADAPTER FÜR EIN LOKALES HOCHGESCHWINDIGKEITSNETZ
TELEPHONE SOCKET AND ADAPTER FOR A HIGH SPEED LOCAL NETWORK

(30) Priorité: 29.06.2010 FR 1055232
(43) Date de publication de la demande: 08.05.2013
(73) Titulaire: Orange, 75015 Paris (FR)
(72) Inventeur: BOUFFANT, Olivier, F-22560 Pleumeur Bodou (FR); LE COZIC, Hervé, F-22300 Lannion (FR); GUILLAS, Pierrick, F-22560 Pleumeur Bodou (FR)
(86) Numéro de dépôt international: PCT/FR2011/051491
(87) Numéro de publication internationale: WO 2012/001288

(56) Documents cités:
- EP-A1- 1 641 090
- EP-A2- 1 973 322
- KR-A- 20030 048 048
- US-A1- 2013 315 048
- US-B1- 6 431 918

## Description

La présente invention concerne de manière générale le domaine des télécommunications.

Le câblage téléphonique chez les particuliers est réalisé en grande majorité (à plus de 90%) avec du câble équivalent à la catégorie 3 (normalisée dans la norme IS 11801) qui a été fabriqué pour transporter, à la base, le service téléphonique sur la bande de fréquence de 300 Hz à 3400 Hz. Ce câble comporte 4 paires de fils conducteurs : une première paire sert aux communications téléphoniques, une autre paire sert éventuellement pour une seconde ligne téléphonique. Les deux autres paires pouvaient servir pour une sonnerie supplémentaire et/ou pour de l'anti-tintement par exemple mais ne sont plus utilisées.

Le brevet US 6 431 918 B1 décrit un connecteur modulaire mâle pour la transmission 100Base-T, conçu pour la transmission sur des réseaux de catégorie 5, présentant un module d'insertion au sein duquel des contacts disposés sur une première pièce sont connectés à des plots disposé sur une deuxième pièce au moyen d'un circuit imprimé.

La demande EP 1 641 090 A2 décrit un connecteur électrique mâle, de type fiche modulaire téléphonique, pouvant opérer à des fréquences élevées avec une diaphonie réduite.

La demande EP 1 973 322 A2 décrit une configuration particulière de réseau composé de lignes téléphoniques.

Il est à noter que depuis quelques années, la technologie ADSL utilise ce câblage afin d'amener les services haut débit avec une utilisation dans la bande de fréquence allant jusqu'à 1,1 MHz voire 2,2 MHz. Le câble de catégorie 3 chez le particulier supporte cette technologie ADSL (avec des limites de portée à respecter) avec l'utilisation de filtres distribués ou d'un filtre maitre.

La technologie ADSL utilise une seule et même paire (la paire 1, fils gris-blanc) dans l'installation, ce qui laisse les trois autres paires disponibles.

Ainsi, que l'installation téléphonique soit dédiée à la téléphonie pure ou à l'ADSL, au moins deux paires de fils conducteurs ne sont plus utilisées, mais sont présentes.

A partir d'une entrée de poste, encore appelé dispositif de terminaison de ligne (DTI), le câblage chez un particulier comporte plusieurs prises téléphoniques, dites prises en T (deux ou trois en moyenne) et ce câblage est réalisé soit en bus, soit en étoile (ou Y) soit en une combinaison de bus et étoile.

Une prise téléphonique comporte des plots de connexion, par exemple huit plots et, les quatre paires sont généralement raccordées de la façon suivante :
- paire 1 : sur les plots 1 et 3,
- paire 2 : sur les plots 2 et 5,
- paire 3 : sur les plots 6 et 8,
- paire 4 : sur les plots 4 et 7.

Par ailleurs, le besoin en connexion haut débit s'accroit. Par exemple, les liaisons par fibres optiques amènent le haut débit chez les particuliers. Pour profiter pleinement du haut débit, la prise optique doit être posée à proximité du téléviseur pour recevoir la télévision par ce biais. Cela impose des travaux chez le particulier. En outre, l'installation une fois réalisée est peu flexible : par exemple pour recevoir la télévision dans une autre pièce, il faut à nouveau modifier le câblage et changer la prise optique de pièce.

Ainsi, on peut chercher à utiliser des paires téléphoniques pour établir une connexion haut débit. Cependant, les câblages en catégorie 3 n'ont pas une qualité suffisante pour transporter l'interface Ethernet 100BaseTx qui est assez sensible en termes de diaphonie et de temps de propagation (delay skew, temps de propagation dans les paires d'un câble).

De plus, les inventeurs ont réalisé en laboratoire un lien point-à-point entre deux prises téléphoniques, en conservant le câblage tel qu'il est classiquement effectué sur les prises. La liaison a pu être réalisée et être mise en service sur un maximum de cinq mètres dans le meilleur cas, ce qui est insuffisant car on sait qu'un lien moyen chez un particulier est d'environ dix-sept mètres.

La présente invention a pour but de résoudre les inconvénients de la technique antérieure en fournissant une prise téléphonique, ainsi qu'un adaptateur, selon les revendications 1 et 4. Des modes de réalisation particuliers sont définis dans les revendications dépendant de ces revendications 1 et 4.

Ainsi, la diaphonie est limitée et la transmission Ethernet se fait dans de meilleures conditions et peut atteindre des portées plus importantes et compatibles avec les besoins d'un utilisateur.

L'affaiblissement linéique est également amélioré.

Selon une caractéristique préférée, chacune desdites deux paires de fils conducteurs est torsadée au plus près des plots de connexion.

Cela contribue également à diminuer la diaphonie entre paires de fils conducteurs.

Selon une caractéristique préférée, aucun autre fil conducteur n'est connecté aux plots auxquels sont connectés lesdites deux paires de fils conducteurs.

Ainsi, les performances du réseau haut débit sont meilleures.

L'adaptateur selon l'invention permet de connecter un équipement au réseau haut débit.

Selon une caractéristique préférée, l'adaptateur, comportant une seconde prise comportant des plots de connexion correspondant aux plots de la fiche, est caractérisé en ce que les plots de la seconde prise, qui correspondent aux deux paires de plots de la fiche connectées aux deux paires de plots de la prise d'adaptateur, ne sont pas connectés.

L'invention concerne aussi un réseau local haut débit selon la revendication 6. Le réseau ainsi formé procure des performances élevées.

D'autres caractéristiques et avantages apparaîtront à la lecture de modes de réalisation préférés décrits en référence aux figures dans lesquelles :
- la figure 1 représente le câblage réalisé dans une prise téléphonique selon la technique antérieure,
- la figure 2 représente un mode de réalisation de câblage réalisé dans une prise téléphonique selon un mode de réalisation de l'invention,
- la figure 3 représente un mode de réalisation de réseau Ethernet selon un mode de réalisation de l'invention, et
- la figure 4 représente un mode de réalisation d'adaptateur selon un mode de réalisation de l'invention.

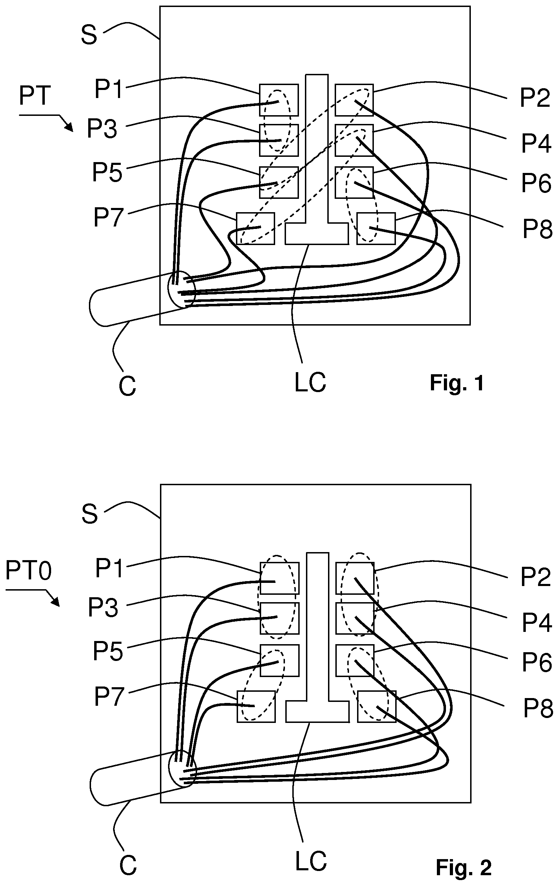

Une prise téléphonique classique PT est représentée à la **figure 1**.

La prise téléphonique, dite prise en « T », comporte un socle S destiné à être fixé par exemple sur un mur, et un couvercle non représenté.

Le socle comporte un logement central LC sensiblement en forme de « T », pour recevoir une fiche de connexion de forme adaptée.

Des plots de connexion P1 à P8 sont répartis de part et d'autre du logement. Plus précisément, quatre plots P1, P3, P5 et P7 sont sensiblement alignés d'un côté et les quatre plots P2, P4, P6 et P8 sont en vis à vis.

Un câble C de fils conducteurs est relié à la prise PT.

Les plots adjacents P1 et P3 sont connectés à une première paire de fils conducteurs. Cette première paire est utilisée pour la téléphonie.

Les plots P2 et P5, situés de part et d'autre du logement, sont connectés à une seconde paire de fils conducteurs.

Les plots adjacents P6 et P8 sont connectés à une troisième paire de fils conducteurs. Cette troisième paire peut être utilisée pour une seconde ligne téléphonique.

Enfin les plots P4 et P7, situés de part et d'autre du logement, sont connectés à une quatrième paire de fils conducteurs.

Les quatre couples de plots ainsi formés sont schématisés par des ellipses en traits pointillés.

Les deuxième et quatrième paires de fils conducteurs ne sont pas utilisées.

Selon un mode de réalisation de l'invention représenté en référence à la **figure 2**, le câblage interne d'une prise PT0 est modifié. Les deuxième et quatrième paires de fils conducteurs sont utilisées pour former une liaison Ethernet.

Les première et troisième paires ne sont pas affectées par l'invention. Leurs connexions demeurent donc inchangées.

Les deuxième et quatrième paires sont tout d'abord déconnectées de leurs plots respectifs.

La deuxième paire est ensuite reconnectée sur les plots adjacents P5 et P7. Les fils sont torsadés au plus près des plots.

De même, la quatrième paire est reconnectée sur les plots adjacents P2 et P4. Là aussi, les fils sont torsadés au plus près des plots ce qui permet de diminuer la diaphonie entre les paires et donc d'améliorer la transmission.

Les quatre couples de plots ainsi formés sont schématisés par des ellipses en traits pointillés.

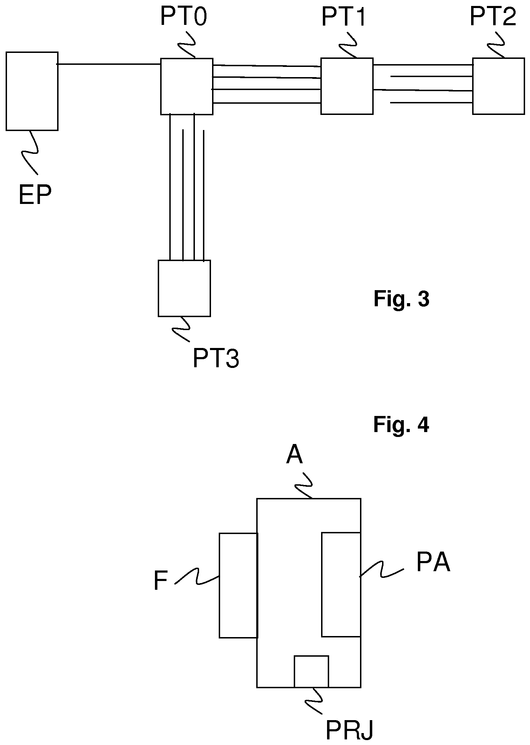

En référence à la **figure 3**, une installation téléphonique, par exemple chez un particulier ou dans une entreprise, comporte une entrée de poste EP, par exemple un dispositif de terminaison de ligne DTI et quatre prises téléphoniques PT0 à PT3. Les paires de fils conducteurs sont représentées chacune par un trait, pour simplifier la figure.

La prise PT0 est d'une part reliée à l'entrée de poste et d'autre part à la prise téléphonique PT1. Cette dernière est également reliée à la prise téléphonique PT2.

La prise PT0 est en outre reliée à la prise PT3.

Ainsi, le réseau téléphonique comporte deux branches en étoile, ou en Y. L'une des branches comporte les prises téléphoniques PT0, PT1 et PT2, reliées en bus.

L'autre branche comporte les prises PT0 et PT3.

Selon l'invention, un réseau Ethernet point à point a été réalisé entre les prises téléphoniques PT0 et PT1 de l'installation. Ces deux prises sont donc reliées par quatre paires de fils conducteurs. Dans chaque prise PT0 et PT1, les connexions sont celles décrites en référence à la figure 2.

Dans cette configuration, les prises téléphoniques PT0 et PT1 qui servent d'extrémité au réseau Ethernet sont donc reliées à d'autres prises.

Pour mettre en oeuvre l'invention, il est préférable que les paires utilisées pour ce réseau soient réservées à cet usage. En d'autres termes, les paires utilisées pour le réseau Ethernet entre les prises PT0 et PT1 sont déconnectées, au niveau des prises PT0 et PT1, des paires correspondantes allant vers les prises PT2 et PT3.

La prise PT3 n'est reliée à la prise PT0 que par les deux paires ne correspondant pas à celles utilisées pour le réseau Ethernet. Il en est de même entre les prises PT1 et PT2.

Ainsi, aucun autre fil conducteur n'est connecté aux plots des prises PT0 et PT1 auxquels sont connectés les deux paires utilisées pour le réseau Ethernet.

Ainsi, les performances du réseau Ethernet sont meilleures.

S'il existe des prises téléphoniques intermédiaires entre les deux prises téléphoniques qui forment les extrémités du réseau Ethernet, il est préférable de modifier, dans les prises intermédiaires, la connexion des fils des paires utilisées pour le réseau Ethernet.

Dans une prise intermédiaire, on établit une connexion directe à l'aide d'un connecteur unifilaire pour chaque fil conducteur de chaque paire utilisée pour le réseau Ethernet.

Une fois le réseau Ethernet formé entre deux prises téléphoniques, un adaptateur « T-RJ45 » spécifique est connecté à chacune des prises formant une extrémité du réseau Ethernet.

La **figure 4** représente un adaptateur A selon l'invention.

L'adaptateur A comporte une fiche F en T destinée à être insérée dans le logement LC de la prise téléphonique selon l'invention. Il comporte également une première prise PRJ de type RJ45 et une deuxième prise PA de type en T. La fiche en T, la prise en T et la prise RJ45 comportent chacune des plots de connexion, non représentés, que l'on repère simplement dans ce qui suit par un numéro entre 1 et 8.

Le câblage interne de l'adaptateur A est le suivant :
- la première paire de fils conducteurs est connectée sur les plots 4 et 5 de la prise PRJ, ainsi que sur les plots 1 et 3 de la fiche F et de la prise PA (en T),
- la deuxième paire de fils conducteurs est connectée sur les plots 1 et 2 de la prise PRJ, ainsi que sur les plots 5 et 7 de la fiche F, mais elle n'est pas raccordée côté prise PA (en T),
- la troisième paire de fils conducteurs est connectée sur les plots 7 et 8 de la prise PRJ, ainsi que sur les plots 6 et 8 de la fiche Fet de la prise PA (en T),
- la quatrième paire de fils conducteurs est connectée sur les plots 3 et 6 de la prise PRJ, ainsi que sur les plots 2 et 4 de la fiche F, mais elle n'est pas raccordée côté prise PA (en T).

Ainsi, les deuxième et quatrième paires, utilisées pour former le réseau Ethernet, ne sont pas connectées à la prise PA en T de l'adaptateur A. Ces deux paires ne sont donc connectées qu'entre la fiche en T et la prise de type RJ45 de l'adaptateur A.

## Revendications

1. Prise téléphonique (PT) comportant :
un logement (LC) destiné à recevoir une fiche de connexion ; et
des plots de connexion (P1,P2,P3,P4,P5,P6,P7,P8) répartis de part et d'autre du logement,
la prise téléphonique étant **caractérisée**
**en ce qu'**elle comprend en outre quatre paires de fils conducteurs d'une installation téléphonique, connectées aux plots de connexion, parmi lesquelles au moins une paire est dédiée à la téléphonie ;
**en ce que** chacune desdites paires de fils conducteurs a ses fils conducteurs connectés à des plots de connexion adjacents ; et
**en ce que** ladite prise téléphonique forme ainsi une extrémité d'un réseau local haut débit.

2. Prise téléphonique selon la revendication 1, dans laquelle chacune desdites paires de fils conducteurs est torsadée au plus près des plots de connexion.

3. Prise téléphonique selon la revendication 1 ou 2, dans laquelle aucun autre fil conducteur n'est connecté aux plots auxquels sont connectés lesdites deux paires de fils conducteurs.

4. Adaptateur (A) comportant au moins une prise (PA,PRJ) et une fiche (F) apte à être connectée à la prise téléphonique (PT) selon l'une quelconque des revendications 1 à 3, la prise d'adaptateur et la fiche comportant des plots de connexion,
l'adaptateur étant **caractérisé**
**en ce que** la prise d'adaptateur comprend deux paires de plots ;
**en ce que** la fiche comprend deux paires de plots ;
**en ce que** les deux paires de plots de la fiche sont connectées aux deux paires de plots de la prise d'adaptateur ; et
**en ce que** la fiche est adaptée pour que, lorsqu'elle est connectée à la prise téléphonique (PT), les deux paires de plots de la fiche qui sont ainsi connectés correspondent aux plots de la prise téléphonique auxquels sont connectées deux desdites paires de fils conducteurs.

5. Adaptateur selon la revendication 4, dans lequel les plots de la seconde prise, qui correspondent aux deux paires de plots de la fiche connectées aux deux paires de plots de la prise d'adaptateur, ne sont pas connectés.

6. Réseau local haut débit, comprenant deux prises téléphoniques selon l'une quelconque des revendications 1 à 3, reliées par au moins deux paires de fils conducteurs d'une installation téléphonique, parmi lesquelles au moins une paire est dédiée à la téléphonie.

## Patentansprüche

1. Telefonsteckdose (PT), die aufweist:
eine Aufnahme (LC), die dazu bestimmt ist, einen Anschlussstecker aufzunehmen; und
Anschlusskontakte (P1, P2, P3, P4, P5, P6, P7, P8), die zu beiden Seiten der Aufnahme verteilt sind,
wobei die Telefonsteckdose **dadurch gekennzeichnet ist,**
**dass** sie außerdem vier Paare von Leiterdrähten einer Telefonanlage enthält, die an die Anschlusskontakte angeschlossen sind, von denen mindestens ein Paar für das Telefonsystem bestimmt ist;
**dass** die Leiterdrähte jedes der Paare von Leiterdrähten an benachbarte Anschlusskontakte angeschlossen sind; und
**dass** die Telefonsteckdose so ein Ende eines lokalen Hochgeschwindigkeitsnetzes bildet.

2. Telefonsteckdose nach Anspruch 1, wobei jedes der Paare von Leiterdrähten in nächster Nähe der Anschlusskontakte verdrillt ist.

3. Telefonsteckdose nach Anspruch 1 oder 2, wobei kein anderer Leiterdraht an die Anschlusskontakte angeschlossen ist, an die die zwei Paare von Leiterdrähten angeschlossen sind.

4. Adapter (A), der mindestens eine Steckdose (PA, PRJ) und einen Stecker (F) aufweist, der an die Telefonsteckdose (PT) nach einem der Ansprüche 1 bis angeschlossen werden kann, wobei die Adapter-Steckdose und der Stecker Anschlusskontakte aufweisen,
wobei der Adapter **dadurch gekennzeichnet ist,**
**dass** die Adapter-Steckdose zwei Paare von Anschlusskontakten enthält;
**dass** der Stecker zwei Paare von Anschlusskontakten enthält;
**dass** die zwei Paare von Anschlusskontakten des Steckers an die zwei Paare von Anschlusskontakten der Adapter-Steckdose angeschlossen sind; und
**dass** der Stecker so angepasst ist, dass, wenn er an die Telefonsteckdose (PT) angeschlossen ist, die zwei Paare von Anschlusskontakten des Steckers, die so angeschlossen sind, den Anschlusskontakten der Telefonsteckdose entsprechen, mit denen zwei der Paare von Leiterdrähten verbunden sind.

5. Adapter nach Anspruch 4, wobei die Anschlusskontakte der zweiten Steckdose, die den zwei Paaren von Anschlusskontakten des Steckers entsprechen, die an die zwei Paare von Anschlusskontakten der Adapter-Steckdose angeschlossen sind, nicht angeschlossen sind.

6. Lokales Hochgeschwindigkeitsnetz, das zwei Telefonsteckdosen nach einem der Ansprüche 1 bis 3 enthält, die durch mindestens zwei Paare von Leiterdrähten einer Telefonanlage verbunden sind, von denen mindestens ein Paar für das Telefonsystem bestimmt ist.

## Claims

1. Telephone socket (PT) comprising:
a housing (LC) intended to receive a connection plug; and
connection pads (P1, P2, P3, P4, P5, P6, P7, P8) distributed on either side of the housing,
the telephone socket being **characterized**
**in that** it further comprises four pairs of conducting wires of a telephone installation, which are connected to the connection pads, at least one of these pairs being dedicated to telephony;
**in that** each of the said pairs of conducting wires has its conducting wires connected to adjacent connection pads; and
**in that** the said telephone socket thus forms an end of a high-speed local network.

2. Telephone socket according to Claim 1, in which each of the said pairs of conducting wires is twisted as near as possible to the connection pads.

3. Telephone socket according to Claim 1 or 2, in which no other conducting wire is connected to the pads to which the said two pairs of conducting wires are connected.

4. Adapter (A) comprising at least one socket (PA, PRJ) and one plug (F) which is able to be connected to the telephone socket (PT) according to any one of Claims 1 to 3, the adapter socket and the plug comprising connection pads,
the adapter being **characterized**
**in that** the adapter socket comprises two pairs of pads;
**in that** the plug comprises two pairs of pads;
**in that** the two pairs of pads of the plug are connected to the two pairs of pads of the adapter socket; and
**in that** the plug is adapted so that, when it is connected to the telephone socket (PT), the two pairs of pads of the plug which are thus connected correspond to the telephone socket pads to which two of the said pairs of conducting wires are connected.

5. Adapter according to Claim 4, in which the pads of the second socket, which correspond to the two pairs of pads of the plug which are connected to the two pairs of pads of the adapter socket, are not connected.

6. High-speed local network, comprising two telephone sockets according to any one of Claims 1 to 3, linked by at least two pairs of conducting wires of a telephone installation, at least one of these pairs being dedicated to telephony.
